# EUROPEAN PATENT SPECIFICATION

(11) **EP 4 364 848 B1**
(45) Date of publication and mention of the grant of the patent: **07.10.2026**
(21) Application number: 23204828.0
(22) Date of filing: 20.10.2023
(51) Int. Cl.: B01J 35/39, C25B 1/042, C25B 1/55, C25B 9/50, C25B 11/052, C25B 11/087, B01J 19/12, C01B 3/042, C01B 13/02

(54) **PHOTOCATALYST DECOMPOSITION SYSTEM**
FOTOKATALYSATORZERSETZUNGSSYSTEM
SYSTÈME DE DÉCOMPOSITION DE PHOTOCATALYSEUR

(30) Priority: 02.11.2022 JP 2022175972
(43) Date of publication of application: 08.05.2024
(73) Proprietor: Hitachi, Ltd., Tokyo 100-8280 (JP)
(72) Inventor: TAKAHASHI, Hiromasa, Tokyo 100-8280 (JP); YABUUCHI, Shin, Tokyo 100-8280 (JP); FUKATANI, Naoto, Tokyo 100-8280 (JP); TAKAMATSU, Daiko, Tokyo 100-8280 (JP)
(74) Representative: MERH-IP Matias Erny Reichl Hoffmann Patentanwälte PartG mbB

(56) References cited:
- WO-A1-2004/085306
- US-A1- 2013 256 147
- US-A1- 2016 040 303
- HAN HONGTAO ET AL: "Enhanced photocatalytic splitting of photothermally induced water vapor to evolve hydrogen", CHEMICAL ENGENEERING JOURNAL, ELSEVIER, AMSTERDAM, NL, vol. 450, 2 August 2022 (2022-08-02), XP087181621, ISSN: 1385-8947, [retrieved on 20220802], DOI: 10.1016/J.CEJ.2022.138419

## Description

### BACKGROUND OF THE INVENTION

### 1. Field of the Invention

The present invention relates to a photocatalyst decomposition system.

### 2. Description of Related Art

A technique for decomposing water with sunlight and generating hydrogen with high efficiency is a storable energy carrier production technique having a low cost without discharging CO₂ and is expected to be applied to a renewable energy service and an environmental service such as hydrogen power generation and a hydrogen automobile that contributes to fossil fuel elimination.

Further, if a photocatalyst technique for decomposing a chemical substance having a large environmental influence is developed and becomes a technique that can use sunlight with high efficiency, the technique can be applied to production of a useful material by decomposing CO₂ and methane discarded in not only water but also atmosphere, and NOₓ or a nitrate salt flowing into a water source from soil. Reduction of CO₂ and methane contributes to inhibition of global warming, and NOₓ or a nitrate salt flowing into a water source from soil contributes to biodiversity through water or atmosphere. By not only decomposing but also converting such substances to a high-value substance such as alcohol or formic acid, such a technique is expected to be expanded as an industry with recycling-oriented PF through artificial photosynthesis as a substance generation system.

An example of such a technique is disclosed in PTL 1. PTL 1 discloses a water photolysis apparatus including a casing 1 that includes a light transmission window 12 configured to transmit sunlight L, and a photolysis layer 5 provided on the casing 1. There is disclosed a configuration in which the photolysis apparatus is provided in a state of floating on a water layer 9, water vapor is evaporated from the water layer 9 due to irradiation with sunlight L, the water vapor is introduced into the photolysis layer 5, photocatalyst particles 52 are excited by the sunlight L in the photolysis layer 5, and the introduced water vapor is decomposed into hydrogen and oxygen. According to the configuration in PTL 1, it is possible to provide a water photolysis apparatus that can more efficiently obtain hydrogen and oxygen by inhibiting a reverse reaction and that can further promote photolysis of water by effectively using solar energy.

PTL 2 discloses a hydrogen producing cell including an anode electrode; a photocatalytic material adjacent to the anode electrode; a solid electrolyte adjacent to a side of the photocatalytic material opposite the anode electrode; and a cathode electrode adjacent to a side of the solid electrolyte opposite the photo-catalytic material.

NPTL discloses a surface carbonized wood/TiO2 (C-wood/TiO2) photothermal-photocatalytic system.

### Citation List

### Patent Literature

PTL 1: WO 2004/085306
PTL 2: US 2016/040303 A1

### Non-Patent Literature

NPTL: HAN HONGTAO ET AL: "Enhanced photocatalytic splitting of photothermally induced water vapor to evolve hydrogen", CHEMICAL ENGENEERING JOURNAL, ELSEVIER, AMSTERDAM, NL, vol. 450, 2 August 2022 (2022-08-02), XP087181621, ISSN: 1385-8947, D01: 10.1016/J.CEJ.2022.138419.

### SUMMARY OF THE INVENTION

In the related art, in a configuration of an apparatus for decomposing a liquid phase by using a photocatalyst, light is emitted to a photocatalyst in a state in which the photocatalyst is charged in water in a form of a powder or a thin film to decompose water. A gas obtained by decomposition is generated as air bubbles on a surface of the photocatalyst, a certain amount of the gas is desorbed into water and collected, and there is a portion covered with the generated air bubbles on the surface of the photocatalyst. Accordingly, a contact area between a catalyst and water is reduced, resulting in saturation or reduction of a reaction rate, and thus an object is to eliminate such a problem and maintain a high reaction rate.

As described above, since air bubbles or the like in a liquid phase may cause a reaction rate saturation or reduction, it is important to improve efficiency of the reaction by allowing the photocatalyst to react in a state of being charged in a gas phase to inhibit generation of air bubbles and to increase a contact surface area between the gas phase and the photocatalyst. In PTL 1 described above, the photocatalyst is supported in a state of being dispersed in a powder form on a porous material, it is difficult to form electrical continuity, and it is difficult to improve efficiency of the reaction by using an electrode or the like.

In view of the above circumstances, an object of the invention is to provide a photocatalyst decomposition system that can supply a gas phase containing a substance to be decomposed by a photocatalyst and that can perform decomposition of the substance more efficiently than in the related art.

According to an aspect of the invention for solving the above problem, a photocatalyst decomposition system includes: a gas phase generation apparatus configured to convert a liquid phase containing a decomposition object into a gas phase; and/or a photocatalyst member configured to come into contact with the gas phase to decompose the decomposition object by light from a light source and generate a gas phase. The photocatalyst member includes a base material formed of a porous material and a photocatalyst layer provided on a surface of the base material. The photocatalyst decomposition system further comprises at least two of the photocatalyst members, a proton conductive film provided between the at least two photocatalyst members; and a pair of electrodes connected to the at least two photocatalyst members, respectively. A potential is adjustable by the electrodes, and a gas or water vapor is supplied to the at least two photocatalyst members, respectively. A more specific configuration of the invention is described in claims.

According to the invention, it is possible to provide a photocatalyst decomposition system that can supply a gas phase containing a substance to be decomposed by a photocatalyst and that can perform decomposition of the substance more efficiently than in the related art.

Objects, configurations, and effects other than those described above will be clarified by the following description of embodiments. It is noted that the dependencies of the appended claims may be changed and all other possible claim combinations are also encompassed by the present disclosure except claim combinations which would lead to contradictions of the claimed subject-matter.

### BRIEF DESCRIPTION OF THE DRAWINGS

FIG. 1 is a schematic view of a porous material;
FIG. 2 is a schematic view of a photocatalyst member provided in a photocatalyst decomposition apparatus according to the invention;
FIG. 3 schematically shows a photocatalyst decomposition system according to Embodiment 1;
FIG. 4 schematically shows a photocatalyst decomposition system according to Embodiment 2;
FIG. 5 schematically shows a photocatalyst decomposition system according to Embodiment 3;
FIG. 6 schematically shows a photocatalyst decomposition system according to Embodiment 4;
FIG. 7 schematically shows a photocatalyst decomposition system according to Embodiment 5; and
FIG. 8 schematically shows a photocatalyst decomposition system according to Embodiment 6.

### DESCRIPTION OF EMBODIMENTS

Hereinafter, a configuration of the invention will be described in detail with reference to the drawings.

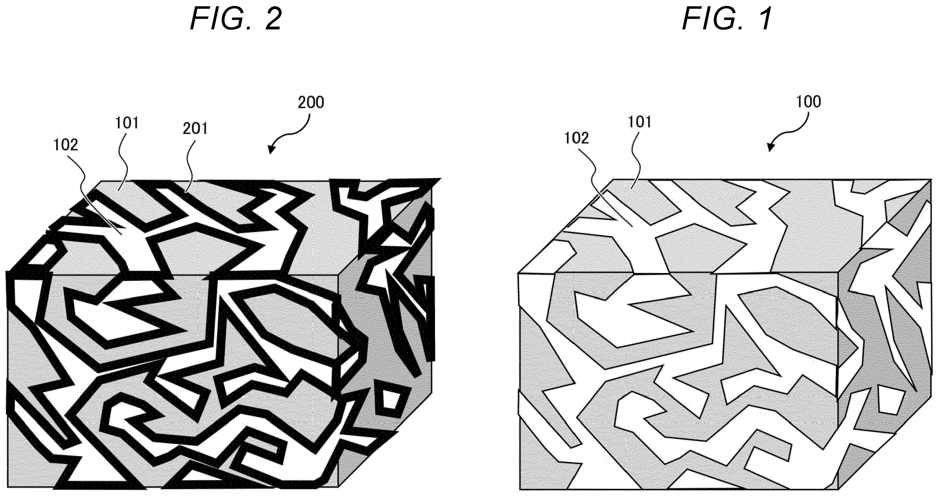

As described above, a photocatalyst decomposition system according to the invention includes: a gas phase generation apparatus configured to convert a liquid phase containing a decomposition object into a gas phase; and a photocatalyst member configured to come into contact with the gas phase to decompose the decomposition object by light from a light source and generate a gas phase. The photocatalyst member includes a base material formed of a porous material and a photocatalyst layer provided on a surface of the base material. First, the photocatalyst member will be described. FIG. 1 is a schematic view of a porous material. FIG. 2 is a schematic view of a photocatalyst member provided in the photocatalyst decomposition system according to the invention. A porous material 100 shown in FIG. 1 is a nanoporous material having a pore 102 of several µm to several tens of µm in a base material 101. A photocatalyst member 200 in the invention, as shown in FIG. 2, is provided with a photocatalyst layer 201 on a surface of the nanoporous material shown in FIG. 1. In the invention, by using such a photocatalyst member 200, a gas-like or gaseous substance is converted into another gas or substance by a photocatalytic reaction with light from a light source.

The photocatalyst decomposition system according to the invention converts a liquid phase containing a decomposition object into a gas phase (vapor) and brings the gas phase into contact with the photocatalyst member to decompose the decomposition object. By providing the photocatalyst layer 201 on the base material 101 formed of the porous material as described above, a surface area of a photocatalytic reaction portion is increased, and further, a generated gas phase is released without remaining in the photocatalytic reaction portion. Accordingly, it is possible to prevent a phenomenon in which a surface of the photocatalyst layer 201 is covered with air bubbles generated when the liquid phase is brought into contact with the photocatalyst member, and to prevent a decrease in a contact area between the gas phase and the photocatalyst layer 201.

The photocatalyst member provided in the photocatalyst decomposition system according to the invention can decompose not only a gas phase but also a liquid phase.

The base material 101 is a material that transmits light having a wavelength of at least visible light or ultraviolet light, and is preferably a material having a three-dimensional block structure having a porous or reticular fiber material as a skeleton. The material of the base material 101 preferably contains SiO₂, Al₂O₃, TiO₂, MgO, ZnO, CaCO₃, CaO, a transparent carbon nanotube (CNT), or SnO.

The photocatalyst layer 201 is not particularly limited, and for example, at least one of substances listed in the following (1) to (4) can be preferably used, or a combination of these substances may be used.
(1) BiVO₄ doped with Rh or black phosphorus, or BiVO₄,
(2) SrTiO₃ doped with Rh, Ir, La, or Al, or SrTiO₃,
(3) LaON, TiO₂, GaP, SnNb₂O₆, or NaTaO₃ doped with La, or NaTaO₃, and
(4) TaON, LaTiO₂N, TaON, Ta₃N₅, SrTa₂ON, LaTa₂ON, ZnRh₂O₄, Sm₂Ti₂O₅S₂, Y₂Ti₂O₂S₅, g-C₃N₄, Ga₃N₄, Cu_{0.25}Ag_{0.25}In_{0.25}ZnS₂, or CuAgZnSnS₄

Particles of a co-catalyst material that promotes the photocatalytic reaction may be supported on, or a thin film of the co-catalyst material may be provided on at least a part of the photocatalyst layer 201. The co-catalyst material is not particularly limited, and WO₃, Rh/Cr₂O₃, Ag, Rh/SrTiO₃, Pt, CoO, Co₃O₄, IrO₂, PtO₂, phosphorus, NiO, RuO₂, AgSbO₃, or ZnRhOₓ can be preferably used.

A porosity (a volume ratio of the pore 102) of the photocatalyst member 200 is preferably 40% to 95% (40% or more and 95% or less). When the porosity is less than 40%, it is difficult to provide a sufficient surface area for the reaction of the photocatalyst layer 201. When the porosity exceeds 95%, it is difficult to secure strength of the photocatalyst member 200. The base material 101 preferably has a pore width of 10 µm to 500 µm.

A surface area in the pore of the nanoporous material is 10 m²/g to 1000 m²/g (general value). A pore size and material can have various variations (porous glass specific gravity: 1 g/cm² to 2 g/cm²).

As a method for producing the photocatalyst member 200, the pore 102 in the porous material as the base material 101 can be subjected to immersion, vacuum impregnation, vacuum aeration, or spin coating with respect to a liquid obtained by mixing a liquid (MOD material) containing a metal organic compound that contains the material of the photocatalyst layer 201 and a metal complex solution or a metal-oxide colloid solution produced by a sol-gel method, followed by sintering to produce an object with photocatalyst coating and modification on an inner surface of the pore. Various photocatalyst materials can be synthesized by selectively using the above method. A coating film is continuous up to an internal structure, thereby enabling electrical conduction from the surface. In other words, an outer surface of the photocatalyst member 200 and a surface of the pore 102 in the photocatalyst member 200 have electrical continuity. A transparent conductive thin film layer may be provided on a surface of the photocatalyst layer 201 or between the base material 101 and the photocatalyst layer 201, and the photocatalyst layer 201 and the transparent conductive thin film layer may be electrically connected to each other.

### Embodiments

Hereinafter, the photocatalyst decomposition system according to the invention including the above-described photocatalyst member will be described in detail.

### Embodiment 1

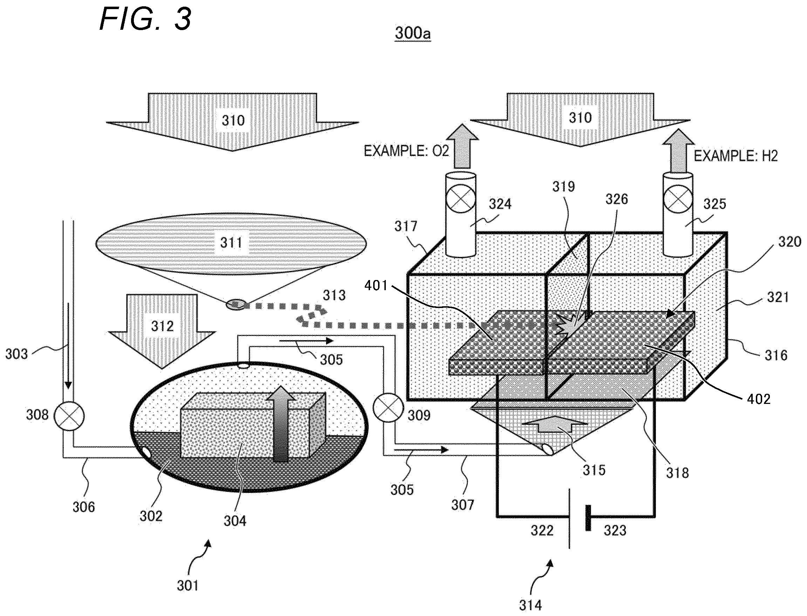

FIG. 3 schematically shows a photocatalyst decomposition system according to Embodiment **1.** As shown in FIG. 3, a photocatalyst decomposition system 300a according to the present embodiment includes a photocatalyst member 320 using the above-described photocatalyst member 200 and a vapor supply apparatus 301 configured to supply vapor to the photocatalyst member 320. The photocatalyst decomposition system supplies a light source (for example, sunlight 310) to the vapor supply apparatus 301 and the photocatalyst member 320 by light supply apparatuses. The photocatalyst decomposition system 300a comprises a housing configured to accommodate the photocatalyst member 320. A transparent window, a lens, or an optical path is provided in the housing, and the sunlight 310 is emitted to the photocatalyst member 320 via the transparent window, the lens, or the optical path. It is preferable that ultraviolet to visible light 311 obtained by spectroscopy and collection of the sunlight 310 outside the housing is introduced into the housing, supplied and emitted to the photocatalyst member 320 through an optical fiber 313, and infrared light 312 obtained by spectroscopy and collection of the sunlight 310 is supplied to the vapor supply apparatus 301, whereby each apparatus can function efficiently.

In the vapor supply apparatus 301, a liquid phase (for example, water) 303 containing a decomposition object, which is supplied through a liquid phase (water) supply pipe 306, is heated using the sunlight 310 by a vapor generation member 304 provided in a vapor generation container 302 to generate vapor 305. The generated vapor is supplied to a photocatalyst decomposition apparatus 314 via a vapor transfer pipe 307.

In the photocatalyst decomposition apparatus 314, the supplied vapor 305 is supplied to the photocatalyst member 320 via a vapor introduction portion 315 and a vapor discharge portion 318.

The photocatalyst member 320 is divided into at least two photocatalyst members 401 and 402 by a separation film 319 formed by a proton conductive film, and electrodes 322 and 323 as voltage application apparatuses are connected to the at least two photocatalyst members 401 and 402, respectively, so that a potential can be adjusted. Furthermore, a gas or water vapor is supplied to the at least two photocatalyst members 401 and 402, respectively. A generated substance can be separated by adjusting the potential by the electrodes 322 and 323.

Generated gases 324 and 325 generated by decomposing the vapor 305 by the photocatalyst member 320 are discharged to the outside. For example, when the vapor 305 is water, oxygen (O₂), hydrogen (H₂), and water vapor (H₂O) are discharged as the generated gas. The decomposition object is not limited to water and can also be carbon dioxide (CO₂), nitrogen oxide (NOₓ), or methane (CH₃). A gas phase generated by decomposition by the photocatalyst member 320 is collected by a collection apparatus.

According to the above-described photocatalyst decomposition system 300a in the invention, the decomposition object contained in the liquid phase can be decomposed efficiently by the photocatalyst after being converted into the gas phase by using natural energy such as sunlight. Since the photocatalyst member 320 used for decomposition by the photocatalyst has a reaction structure (which is porous) through which vapor can pass, a larger surface area can be used in a three-dimensional space.

Further, by providing the electrodes 322 and 323, the decomposition reaction by the photocatalyst can be controlled.

### Embodiment 2

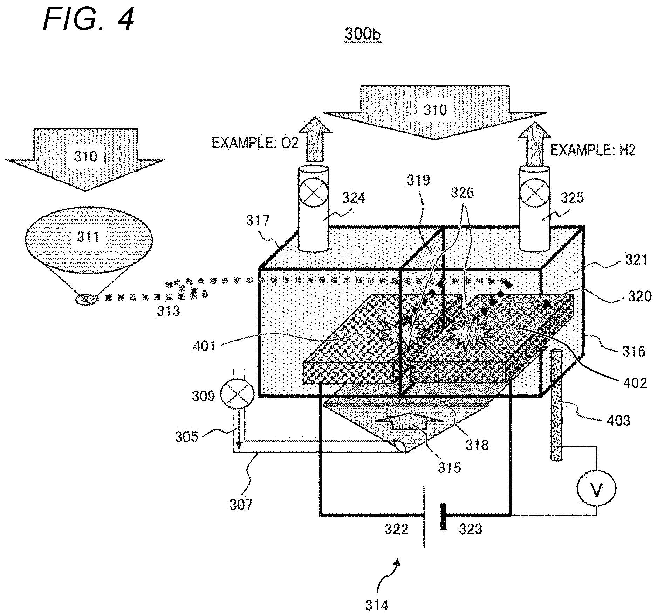

FIG. 4 schematically shows a photocatalyst decomposition system 300b according to Embodiment 2. FIG. 4 mainly shows a configuration of the photocatalyst decomposition apparatus 314 constituting the photocatalyst decomposition system 300b. The photocatalyst decomposition system 300b according to the present embodiment is different from the photocatalyst decomposition system 300a according to Embodiment 1 in that a reference electrode 403 is provided. Accordingly, a potential of the electrodes 322 and 323 can be controlled. As the reference electrode 403, Ag/AgCl can be used.

### Embodiment 3

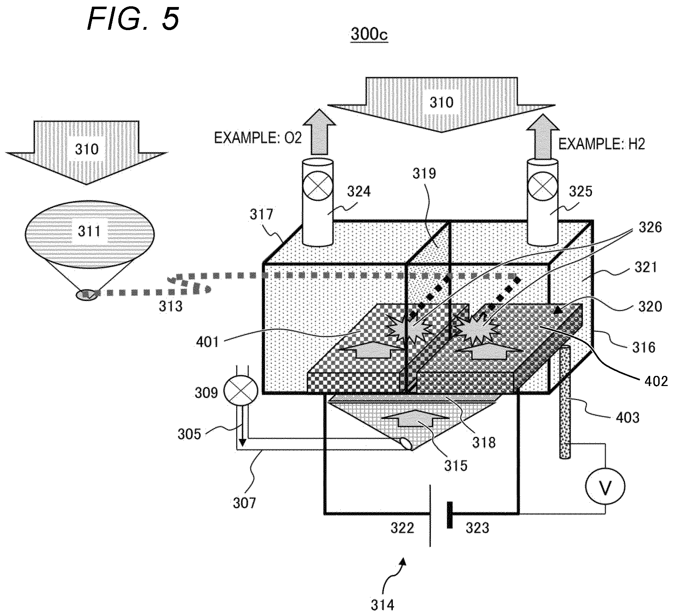

FIG. 5 schematically shows a photocatalyst decomposition system 300c according to Embodiment 3. FIG. 5 mainly shows a configuration of the photocatalyst decomposition apparatus 314 constituting the photocatalyst decomposition system 300c. The photocatalyst decomposition system 300c according to the present embodiment is different from the photocatalyst decomposition system 300b according to Embodiment 2 in that the photocatalyst member 320 is in direct contact with the vapor discharge portion 318. With such a configuration, the vapor 305 can be more efficiently supplied to the photocatalyst member 320.

### Embodiment 4

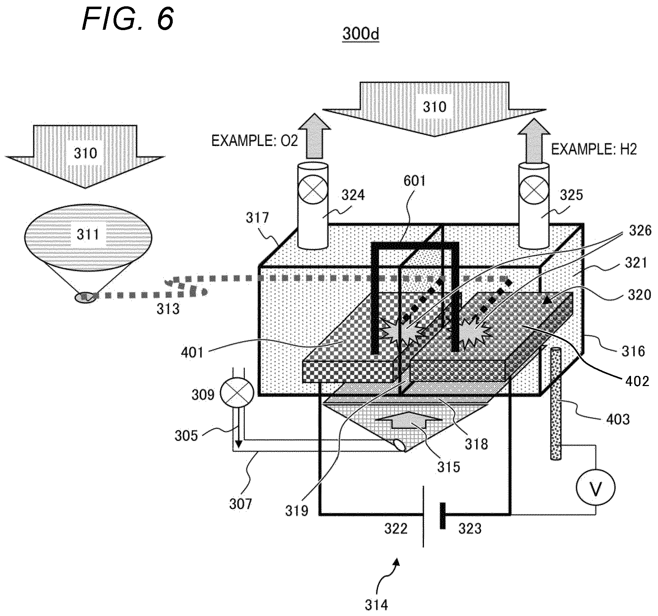

FIG. 6 schematically shows a photocatalyst decomposition system 300d according to Embodiment 4. FIG. 6 mainly shows a configuration of the photocatalyst decomposition apparatus 314 constituting the photocatalyst decomposition system 300d. The photocatalyst decomposition system 300d according to the present embodiment is different from the photocatalyst decomposition system 300b according to Embodiment 2 in that a conduction terminal 601 is provided. With such a configuration, a carrier can be exchanged between the electrodes 322 and 323, and the photocatalytic decomposition reaction can be controlled more precisely to perform reaction efficiently.

### Embodiment 5

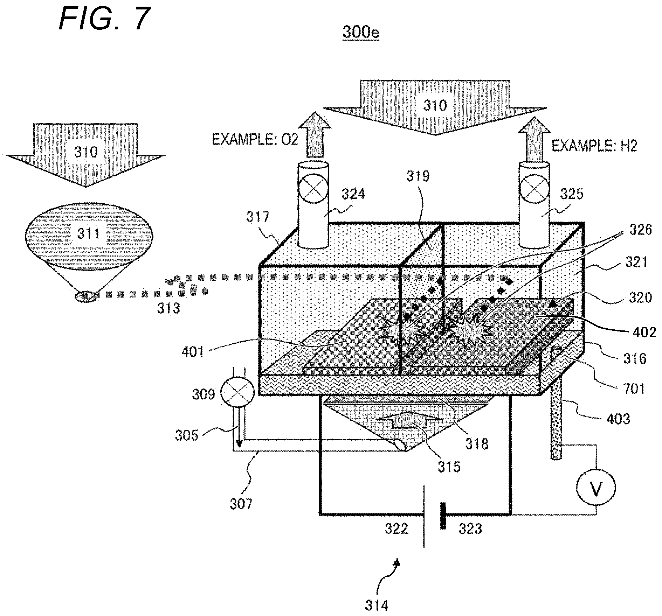

FIG. 7 schematically shows a photocatalyst decomposition system 300e according to Embodiment 5. FIG. 7 mainly shows the photocatalyst decomposition apparatus 314 of the photocatalyst decomposition system 300e. The photocatalyst decomposition system 300e according to the present embodiment is different from the photocatalyst decomposition system 300b according to Embodiment 2 in that the photocatalyst member 320 is in contact with a liquid phase 701. With such a configuration, the liquid phase can be directly supplied to the photocatalyst member 320, and the liquid phase 701 can be efficiently subjected to a reaction simultaneously with decomposition of the gas phase 305.

### Embodiment 6

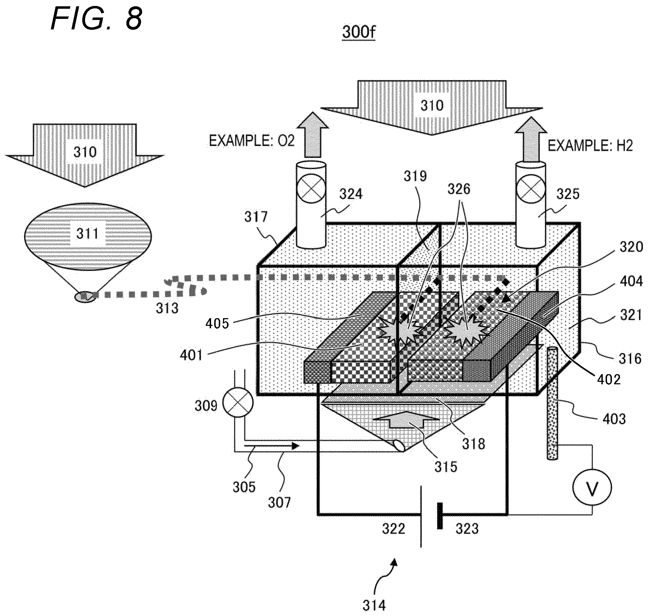

FIG. 8 schematically shows a photocatalyst decomposition system 300f according to Embodiment 6. FIG. 8 mainly shows the photocatalyst decomposition apparatus 314 constituting the photocatalyst decomposition system 300f. The photocatalyst decomposition system 300f according to the present embodiment is different from the photocatalyst decomposition system 300b according to Embodiment 2 in that the photocatalyst member 320 is provided with co-catalyst-attached electrodes 404 and 405. With such a configuration, the photocatalyst member 320 can be efficiently subjected to a reaction.

As described above, according to the invention, it is possible to provide a photocatalyst decomposition apparatus that can supply a gas phase containing a substance to be decomposed by a photocatalyst and that can perform decomposition of the substance more efficiently than in the related art.

The invention is not limited to the above-described embodiments, and includes various modifications. For example, the embodiments described above have been described in detail to facilitate understanding of the invention, and the invention is not necessarily limited to those including all the configurations described above. In addition, a part of the configuration of one embodiment can be replaced with the configuration of another embodiment, and the configuration of another embodiment can be added to the configuration of one embodiment. In addition, a part of the configuration of each embodiment may be added to, deleted from, or replaced with another configuration.

## Claims

1. A photocatalyst decomposition system comprising:
a gas phase generation apparatus (314) configured to convert a liquid phase (303) containing a decomposition object into a gas phase; and
a photocatalyst member (320) configured to come into contact with the gas phase to decompose the decomposition object by light from a light source (310), wherein
the photocatalyst member (320) includes a base material (101) formed of a porous material and a photocatalyst layer (201) provided on a surface of the base material (101), **characterized in** further comprising:
at least two of the photocatalyst members (320);
a proton conductive film provided between the at least two photocatalyst members (320); and
a pair of electrodes (322, 323) connected to the at least two photocatalyst members (320), respectively, wherein
a potential is adjustable by the electrodes (322, 323), and
a gas or water vapor (305) is supplied to the at least two photocatalyst members (320), respectively.

2. The photocatalyst decomposition system according to claim 1, wherein
the photocatalyst member (320) is also configured to come into contact with the liquid phase (303) to decompose the decomposition object.

3. The photocatalyst decomposition system according to claim 1 or 2, wherein
an outer surface of the photocatalyst member (320) and a surface of a pore in the photocatalyst member (320) have electrical continuity.

4. The photocatalyst decomposition system according to claim 1 or 2, wherein
a transparent conductive thin film layer is provided on a surface of the photocatalyst layer (201) or between the base material (101) and the photocatalyst layer (201), and the photocatalyst layer (201) and the transparent conductive thin film layer are electrically connected to each other.

5. The photocatalyst decomposition system according to claim 1 or 2, further comprising:
a configuration configured to adjust a potential by at least one pair of electrodes (322, 323) in contact with the photocatalyst member (320).

6. The photocatalyst decomposition system according to claim 4, wherein
a generated substance is separated by adjusting the potential by the electrode (322, 323).

7. The photocatalyst decomposition system according to claim 1 or 2, further comprising:
a housing configured to accommodate the photocatalyst member (320), wherein
the light source (310) is sunlight, and
a transparent window, a lens, or an optical path is provided in the housing, and the sunlight is emitted to the photocatalyst member (320) via the transparent window, the lens, or the optical path.

8. The photocatalyst decomposition system according to claim 7, wherein
light condensed outside the housing is introduced into the housing through an optical fiber and emitted to the photocatalyst member (320).

9. The photocatalyst decomposition system according to claim 1 or 2, wherein
the base material (101) transmits light having a wavelength of at least visible light or ultraviolet light.

10. The photocatalyst decomposition system according to claim 1 or 2, wherein
the base material (101) has a pore width of 10 µm to 500 µm and a porosity of 40% to 95%.

11. The photocatalyst decomposition system according to claim 1 or 2, wherein
the porous material forming the base material (101) contains SiO₂, Al₂O₃, TiO₂, MgO, ZnO, CaCO₃, CaO, SnO, or a transparent carbon nanotube.

12. The photocatalyst decomposition system according to claim 1 or 2, wherein
the photocatalyst layer (201) is at least one of substances listed in the following (1) to (4):
(1) BiVO₄ doped with Rh or black phosphorus, or BiVO₄,
(2) SrTiO₃ doped with Rh, Ir, La, or Al, or SrTiO₃,
(3) LaON, TiO₂, GaP, SnNb₂O₆, or NaTaO₃ doped with La, or NaTaO₃, and
(4) TaON, LaTiO₂N, TaON, Ta₃N₅, SrTa₂ON, LaTa₂ON, ZnRh₂O₄, Sm₂Ti₂O₅S₂, Y₂Ti₂O₂S₅, g-C₃N₄, Ga₃N₄, Cu_{0.25}Ag_{0.25}In_{0.25}ZnS₂, or CuAgZnSnS₄.

13. The photocatalyst decomposition system according to claim 1 or 2, wherein
particles of a co-catalyst material are supported on, or a thin film of the co-catalyst material is provided on at least a part of the photocatalyst layer (201).

14. The photocatalyst decomposition system according to claim 13, wherein
the co-catalyst material is WO₃, Rh/Cr₂O₃, Ag, Rh/SrTiO₃, Pt, CoO, Co₃O₄, IrO₂, PtO₂, phosphorus, NiO, RuO₂, AgSbO₃, or ZnRhOₓ.

15. The photocatalyst decomposition system according to claim 1 or 2, further comprising:
a light supply apparatus configured to supply light to the photocatalyst member (320) and the gas phase generation apparatus (314); and
a collection apparatus configured to collect a gas phase generated by decomposition by the photocatalyst member (320).

## Patentansprüche

1. Fotokatalysatorzersetzungssystem, das umfasst:
eine Gasphasenerzeugungsvorrichtung (314), die konfiguriert ist, eine flüssige Phase (303), die ein Zersetzungsobjekt enthält, in eine Gasphase umzusetzen; und
ein Fotokatalysatorelement (320), das konfiguriert ist, mit der Gasphase in Kontakt zu gelangen, um das Zersetzungsobjekt durch Licht von einer Lichtquelle (310) zu zersetzen, wobei
das Fotokatalysatorelement (320) ein Basismaterial (101), das aus einem porösen Material gebildet ist, und eine Fotokatalysatorschicht (201) enthält, die auf einer Fläche des Basismaterials (101) vorgesehen ist, **dadurch gekennzeichnet, dass** es ferner umfasst:
mindestens zwei der Fotokatalysatorelemente (320);
eine Protonen leitende Schicht, die zwischen den mindestens zwei Fotokatalysatorelementen (320) vorgesehen ist; und
ein Paar Elektroden (322, 323), die jeweils mit den mindestens zwei Fotokatalysatorelementen (320) verbunden sind, wobei
ein Potenzial durch die Elektroden (322, 323) einstellbar ist und
Gas- oder Wasserdampf (305) jeweils an die mindestens zwei Fotokatalysatorelemente (320) geliefert wird.

2. Fotokatalysatorzersetzungssystem nach Anspruch 1, wobei
das Fotokatalysatorelement (320) außerdem konfiguriert ist, mit der flüssigen Phase (303) in Kontakt zu gelangen, um das Zersetzungsobjekt zu zersetzen.

3. Fotokatalysatorzersetzungssystem nach Anspruch 1 oder 2, wobei
eine äußere Fläche des Fotokatalysatorelements (320) und eine Fläche einer Pore in dem Fotokatalysatorelement (320) eine elektrische Kontinuität besitzen.

4. Fotokatalysatorzersetzungssystem nach Anspruch 1 oder 2, wobei
eine lichtdurchlässige leitende Dünnschicht auf einer Fläche der Fotokatalysatorschicht (201) oder zwischen dem Basismaterial (101) und der Fotokatalysatorschicht (201) vorgesehen ist und die Fotokatalysatorschicht (201) und die lichtdurchlässige leitende Dünnschicht miteinander elektrisch verbunden sind.

5. Fotokatalysatorzersetzungssystem nach Anspruch 1 oder 2, das ferner umfasst:
eine Konfiguration, die konfiguriert ist, ein Potenzial durch mindestens ein Paar Elektroden (322, 323) in Kontakt mit dem Fotokatalysatorelement (320) einzustellen.

6. Fotokatalysatorzersetzungssystem nach Anspruch 4, wobei eine erzeugte Substanz durch Einstellen des Potenzials durch die Elektrode (322, 323) getrennt wird.

7. Fotokatalysatorzersetzungssystem nach Anspruch 1 oder 2, das ferner umfasst:
ein Gehäuse, das konfiguriert ist, das Fotokatalysatorelement (320) aufzunehmen, wobei
die Lichtquelle (310) Sonnenlicht ist und
ein lichtdurchlässiges Fenster, eine Linse oder ein optischer Weg in dem Gehäuse bereitgestellt ist und das Sonnenlicht zu dem Fotokatalysatorelement (320) über das lichtdurchlässige Fenster, die Linse oder den optischen Weg ausgesendet wird.

8. Fotokatalysatorzersetzungssystem nach Anspruch 7, wobei
Licht, das außerhalb des Gehäuses gebündelt wird, durch eine Glasfaser in das Gehäuse eingeeitet wird und zu dem Fotokatalysatorelement (320) ausgesendet wird.

9. Fotokatalysatorzersetzungssystem nach Anspruch 1 oder 2, wobei
das Basismaterial (101) Licht mit einer Wellenlänge von mindestens sichtbarem Licht oder von ultravioletten Licht sendet.

10. Fotokatalysatorzersetzungssystem nach Anspruch 1 oder 2, wobei
das Basismaterial (101) eine Porenbreite von 10 µm bis 500 µm und eine Porosität von 40 % bis 95 % besitzt.

11. Fotokatalysatorzersetzungssystem nach Anspruch 1 oder 2, wobei
das poröse Material, das das Basismaterial (101) bildet, SiO₂, Al₂O₃, TiO₂, MgO, ZnO, CaCO₃, CaO, SnO oder eine lichtdurchlässige Kohlenstoffnanoröhre enthält.

12. Fotokatalysatorzersetzungssystem nach Anspruch 1 oder 2, wobei
die Fotokatalysatorschicht (201) mindestens eine der Substanzen ist, die in den folgenden Angaben (1) bis (4) aufgelistet sind:
(1) BiVO₄, das mit Rh oder schwarzem Phosphor dotiert ist, oder BiVO₄,
(2) SrTiO₃, das mit Rh, Ir, La oder Al dotiert ist, oder SrTiO₃,
(3) LaON, TiO₂, GaP, SnNb₂O₆ oder NaTaO₃, das mit La dotiert ist, oder NaTaO₃ und
(4) TaON, LaTiO₂N, TaON, Ta₃N₅, SrTa₂ON, LaTa₂ON, ZnRh₂O₄, Sm₂Ti₂O₅S₂, Y₂Ti₂O₂S₅, g-C₃N₄, Ga₃N₄, Cu_{0,25}Ag_{0,25}In_{0,25}ZnS₂ oder CuAgZnSnS₄.

13. Fotokatalysatorzersetzungssystem nach Anspruch 1 oder 2, wobei
Teilchen eines Co-Katalysatormaterials auf zumindest einem Teil der Fotokatalysatorschicht (201) getragen werden oder eine dünne Schicht des Co-Katalysatormaterials auf dieser bereitgestellt ist.

14. Fotokatalysatorzersetzungssystem nach Anspruch 13, wobei
das Co-Katalysatormaterial WO₃, Rh/Cr₂O₃, Ag, Rh/SrTiO₃, Pt, CoO, Co₃O₄, IrO₂, PtO₂, Phosphor, NiO, RuO₂, AgSbO₃ oder ZnRhOₓ ist.

15. Fotokatalysatorzersetzungssystem nach Anspruch 1 oder 2, das ferner umfasst:
eine Lichtversorgungsvorrichtung, die konfiguriert ist, Licht an das Fotokatalysatorelement (320) und die Gasphasenerzeugungsvorrichtung (314) zu liefern; und
eine Sammelvorrichtung, die konfiguriert ist, eine durch Zersetzung durch das Fotokatalysatorelement (320) erzeugte Gasphase zu sammeln.

## Revendications

1. Système de décomposition photocatalytique comprenant :
un appareil de génération de phase gazeuse (314) configuré pour convertir une phase liquide (303) contenant un objet de décomposition en une phase gazeuse ; et
un élément photocatalytique (320) configuré pour venir en contact avec la phase gazeuse afin de décomposer l'objet de décomposition au moyen d'une lumière provenant d'une source lumineuse (310), dans lequel l'élément photocatalytique (320) inclut un matériau de base (101) formé d'un matériau poreux et une couche photocatalytique (201) prévue sur une surface du matériau de base (101),
**caractérisé en ce qu'**il comprend en outre :
au moins deux des éléments photocatalytiques (320) ;
un film conducteur de protons prévus entre lesdits au moins deux éléments photocatalytiques (320) ; et
une paire d'électrodes (322, 323) connectées auxdits au moins deux éléments photocatalytiques (320), respectivement, dans lequel un potentiel peut être ajusté par les électrodes (320, 322), et
une vapeur de gaz ou d'eau (305) est alimentée auxdits au moins deux éléments photocatalytiques (320), respectivement.

2. Système de décomposition photocatalytique selon la revendication 1, dans lequel
l'élément photocatalytique (320) est également configuré pour venir en contact avec la phase liquide (303) afin de décomposer l'objet de décomposition.

3. Système de décomposition photocatalytique selon la revendication 1 ou 2, dans lequel
une surface extérieure de l'élément photocatalytique (320) et une surface d'un pore dans l'élément photocatalytique (320) présentent une continuité électrique.

4. Système de décomposition photocatalytique selon la revendication 1 ou 2, dans lequel
une couche à film mince conductrice transparente est prévue sur une surface de la couche photocatalytique (201) ou entre le matériau de base (101) et la couche photocatalytique (201), et la couche photocatalytique (201) et la couche à film mince conductrice transparente sont connectées électriquement l'une à l'autre.

5. Système de décomposition photocatalytique selon la revendication 1 ou 2, comprenant en outre :
une configuration configurée pour ajuster un potentiel par au moins une paire d'électrodes (322, 323) en contact avec l'élément photocatalytique (320).

6. Système de décomposition photocatalytique selon la revendication 4, dans lequel
une substance générée est séparée par ajustement du potentiel par l'électrode (322, 323).

7. Système de décomposition photocatalytique selon la revendication 1 ou 2, comprenant en outre :
un boîtier configuré pour recevoir l'élément photocatalytique (320), dans lequel
la source lumineuse (310) est une lumière solaire, et
une fenêtre transparente, une lentille ou un chemin optique est prévu(e) dans le boîtier, et la lumière solaire est émise vers l'élément photocatalytique (320) via la fenêtre transparente, la lentille ou le chemin optique.

8. Système de décomposition photocatalytique selon la revendication 7, dans lequel
une lumière condensée à l'extérieur du boîtier est introduite jusque dans le boîtier par l'intermédiaire d'une fibre optique et est émise vers l'élément photocatalytique (320).

9. Système de décomposition photocatalytique selon la revendication 1 ou 2, dans lequel
le matériau de base (101) transmet une lumière ayant une longueur d'onde d'au moins une lumière visible ou une lumière ultraviolette.

10. Système de décomposition photocatalytique selon la revendication 1 ou 2, dans lequel
le matériau de base (101) a une largeur de pore de 10 µm à 500 µm et une porosité de 40 % à 95 %.

11. Système de décomposition photocatalytique selon la revendication 1 ou 2, dans lequel
le matériau poreux formant le matériau de base (101) contient : SiO₂, Al₂O₃, TiO₂, MgO, ZnO, CaCO₃, CaO, SnO, ou un nanotube de carbone transparent.

12. Système de décomposition photocatalytique selon la revendication 1 ou 2, dans lequel
la couche photocatalytique (201) est l'une au moins des substances (1) à (4) répertoriées dans la liste suivante :
(1) BiVO₄ dopé au Rh ou au phosphore noir, ou BiVO₄,
(2) SrTiO₃ dopé au Rh, Ir, La ou Al, ou SrTiO₃,
(3) LaON, TiO₂, GaP, SnNb₂O₆, ou NaTaO₃ dopé au La, ou NaTaO₃, et
(4) TaON, LaTiO₂N, TaON, Ta₃N₅, SrTa₂ON, LaTa₂ON, ZnRh₂O₄, Sm₂Ti₂O₅S₂, Y₂Ti₂O₂S₅, g-C₃N₄, Ga₃N₄, Cu_{0,25}Ag_{0,25}In_{0,25}ZnS₂, ou CuAgZnSnS₄.

13. Système de décomposition photocatalytique selon la revendication 1 ou 2, dans lequel
des particules d'un matériau co-catalytique sont supportées, ou un film mince du matériau co-catalytique est prévu au moins sur une partie de la couche photocatalytique (201).

14. Système de décomposition photocatalytique selon la revendication 13, dans lequel
le matériau co-catalytique est : WO₃, Rh/Cr₂O₃, Ag, Rh/SrTiO₃, Pt, CoO, Co₃O₄, IrO₂, PtO₂, phosphore, NiO, RuO₂, AgSbO₃, ou ZnRhOₓ.

15. Système de décomposition photocatalytique selon la revendication 1 ou 2, comprenant en outre :
un appareil d'alimentation de lumière configuré pour alimenter une lumière à l'élément photocatalytique (320) et à l'appareil de génération de phase gazeuse (314) ; et
un appareil de collecte configuré pour collecter une phase gazeuse générée par décomposition par l'élément photocatalytique (320).
